# EUROPEAN PATENT SPECIFICATION

(11) **EP 3 106 272 B1**
(45) Date of publication and mention of the grant of the patent: **07.03.2018**
(21) Application number: 16174666.4
(22) Date of filing: 15.06.2016
(51) Int. Cl.: B26D 7/06, B26D 7/32, B65B 57/16, G05B 19/418, B26D 3/16, B26D 5/00

(54) **METHOD FOR SELECTIVELY FEEDING ROLLS OF PAPER COMING OUT OF A LOG SAW UNIT AND RELATIVE LOG SAW UNIT**
VERFAHREN ZUR SELEKTIVEN ZUFÜHRUNG VON PAPIERROLLEN AUS EINER SÄGEEINHEIT UND FÜR LANGFÖRMIGE PRODUKTE ZUGEHÖRIGE SÄGEEINHEIT
PROCÉDÉ POUR ALIMENTER SÉLECTIVEMENT DES ROULEAUX DE PAPIER SORTANT D'UNE UNITÉ DE SCIE POUR DES PRODUITS LONGS ET UNITÉ DE SCIE RELATIVE

(30) Priority: 19.06.2015 IT UB20151534
(43) Date of publication of application: 21.12.2016
(73) Proprietor: Gambini International S.A., 2449 Luxembourg (LU)
(72) Inventor: GAMBINI, Giovanni, 56100 PISA (IT)
(74) Representative: Branca, Emanuela

(56) References cited:
- EP-A1- 1 127 791
- EP-A1- 2 489 486
- WO-A1-2014/033637

## Description

The present invention refers to a method for selectively feeding rolls of paper coming out of a log saw unit and to a relative log saw unit.

The final part of a "tissue converting" line for producing rolls of toilet or kitchen paper and for their packaging comprises a channel-type log accumulator, arranged downstream of the rewinder, a log saw unit and one or more packaging machines connected to the log saw unit through belt conveyors. The log saw unit comprises a log preloading device on a plurality of feeding channels, which transfer the logs to a cutting device, as well as a plurality of unloading belts arranged side by side to one another, in a number equal to the feeding channels, which transfer the rolls cut by the cutting device towards the belt conveyors. In general, the paths of the log saw unit are equal to four.

In the case in which two packaging machines are provided, for example for simultaneously making two different formats of packs or for increasing the speed of the packaging station, each of them loads the rolls coming from half of the paths of the log saw unit, in general two paths.

The two packaging machines are inevitably subject to machine down times temporally dephased from one another, for example to replace the polyethylene film, or unpredictable in the case of breakdowns.

As a result, also in the case of stop of just one of the two packaging machines the entire log saw unit stops and therefore also the packaging machine that could operate.

In order to partially avoid this problem, currently also deviator belt devices are positioned downstream of the log saw unit, in series with the conveyor belts, to selectively sort the rolls coming out of the log saw unit towards the packaging machines, so as to be able to exclude a temporarily stopped packaging machine, making all of the rolls flow to the other packaging machine.

This solution, however, is not optimal in terms of cost and bulk, since it needs an additional device, the deviator belt, which has a significant bulk in the plant layout.

The purpose of the present invention is to make a method for selectively feeding rolls of paper coming out of a log saw unit and a relative log saw unit that overcome the technical drawbacks indicated above.

Another purpose of the present invention is to make a method for selectively feeding rolls of paper coming out of a log saw unit and a relative log saw unit that allow outgoing rolls to be fed to a single packaging machine.

Another purpose of the present invention is to make a method for selectively feeding rolls of paper coming out of a log saw unit and a relative log saw unit that is particularly simple and functional, with low costs.

These purposes according to the present invention are accomplished by making a method for selectively feeding rolls of paper coming out of a log saw unit and a relative log saw unit as outlined in the independent claims 1 and 7. Further characteristics are provided in the dependent claims.

The characteristics and advantages of a method for selectively feeding rolls of paper coming out of a log saw unit and of a relative log saw unit according to the present invention will become clearer from the following description, given as an example and not for limiting purposes, referring to the attached schematic drawings, in which:
figure 1 is a side elevation view of the log saw unit according to the present invention, in which some components have been partially removed, like for example the preloading device, for the sake of greater clarity of representation;
figure 2 is a plan view of the log saw unit of figure 1, sectioned according to a plane line II-II of figure 1;

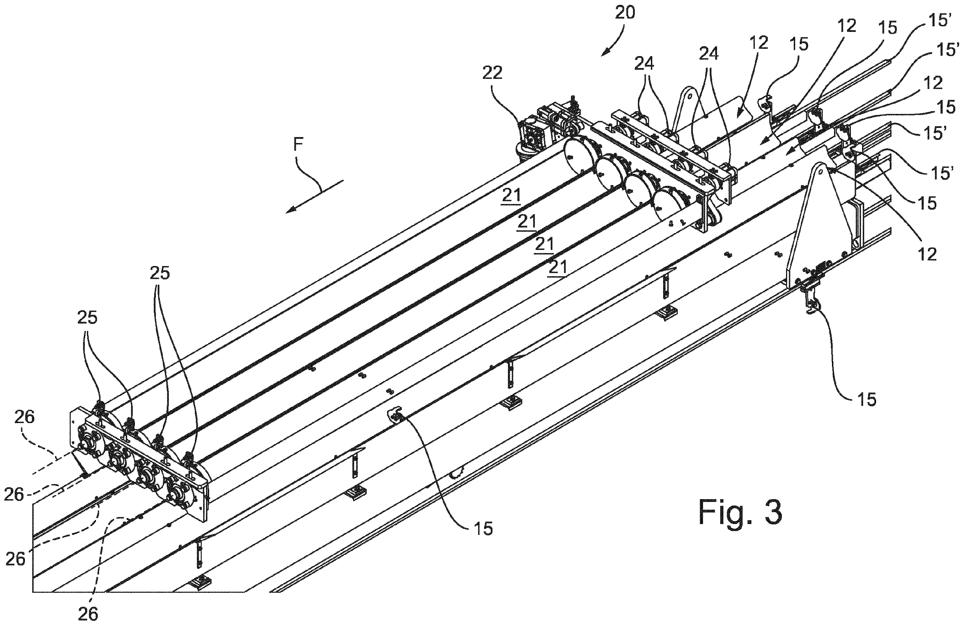

figure 3 is a perspective view of an enlarged detail of the preloading device lying above the feeding channels of the log saw unit according to the invention;

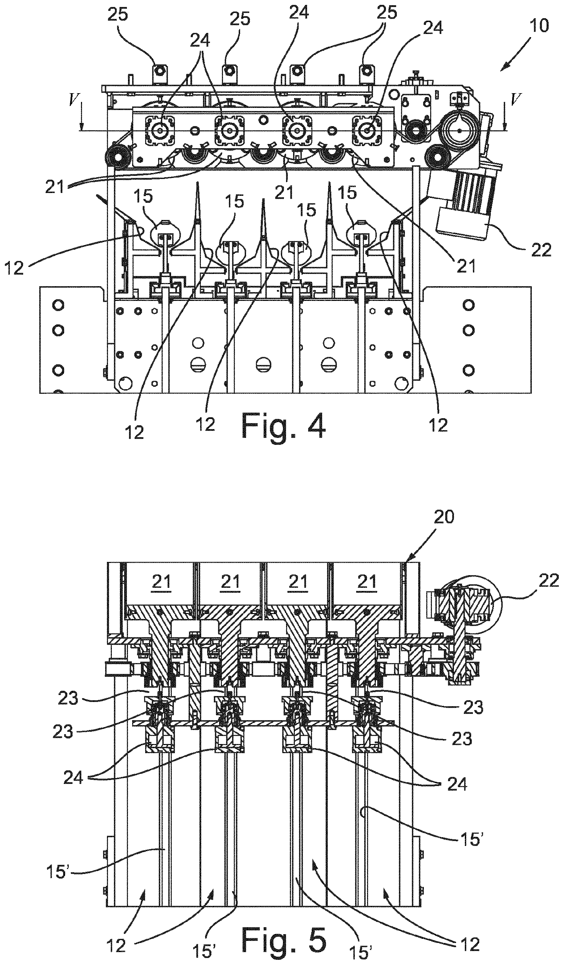

figure 4 is a side elevation view showing a detail of the tail side of the log saw unit;
figure 5 is a section view made according to the plane line V-V of figure 4.

With reference to the figures, a log saw unit is shown, wholly indicated with reference numeral 10, by means of which a method object of the present invention for selectively feeding rolls 11' of paper coming out of the log saw unit 10 is carried out.

In general, the log saw unit comprises a number n of paths equal to four, as shown, but the teachings according to the invention apply without distinction to a log saw unit having a different number of paths, also an odd number.

When combined with a packaging unit, not shown, comprising two packaging machines downstream thereof connected through conveyor belts, the log saw unit in general provides that each one loads the rolls coming from two paths of the log saw unit, but according to the present invention the packaging machines could be in a number greater than two and could load the rolls coming from a different number of paths of the log saw unit.

In the following description, therefore, reference has been generically made to n paths of subgroups of paths and to the relative components of the paths.

The log saw unit 10 for logs 11 of paper comprises a number equal to n of feeding channels 12 for feeding logs, a cutting device 13 for cutting rolls 11' of paper and, downstream of the cutting device 13, a number equal to n unloading belts 14 of rolls 11' equal to the number n of the feeding channels 12.

According to a preferred embodiment, the logs 11, coming from a channel-type accumulator of logs, not shown, are loaded on the feeding channels 12 of the log saw unit 10 through a preloading device 20, arranged in a position directly above a first portion of the n feeding channels 12 with respect to the advancement direction of the logs schematised in the figures with the arrow F.

The unloading belts 14 cooperate with the conveyor belts, not shown, which convey the rolls 11' towards the respective packaging machines operatively associated with them inside the packaging unit. Such conveyor belts for example can be equipped, individually or in subgroups, with photocells, not shown, for detecting the amount of rolls 11' present on them and therefore the accumulation or the end of accumulation conditions of the rolls 11'.

The feeding channels 12 or subgroups of feeding belts 12 each comprise an advancement carrier device 16, equipped with independent actuators 17, preferably made as single servomotors for each feeding channel/sub-group of feeding channels 12.

In the example shown, for instance, two servomotors 17 are shown, each operating on a subgroup of two feeding channels 12.

The advancement carrier device 16 comprises, for each feeding channel 12, a plurality of carriers 15, in general five carriers 15 with stepped continuous movement, distributed along a chain 15' describing a closed loop path with return branch in a lower position with respect to the feeding channels 12.

The log preloading device 20 comprises, according to the invention, a number equal to n cradles 21, each formed by a shell substantially wrapping around the log 11 by an arc of 180°. Each cradle 21 is supported in rotation on opposite end walls at the respective longitudinal axis 26. Each cradle 21 is rotatable by 360° about its own axis 26 in order to unload the log 11 therein contained onto the feeding channel 12 below, in particular the rotation is synchronised with the stepped movement of the advancement carrier device 16 so as to determine the unloading of the log 11 between two successive carriers 15, in the waiting condition when the correct position of the carriers 15 is detected in a predetermined release position of the logs 11.

According to a first simplified embodiment, all of the cradles 21 provide for a single motor that carries out the rotation of all of the cradles 21 simultaneously.

According to a preferred embodiment of the present invention, each of the cradles 21 or subgroups of cradles 21 are independently set in rotation, for example carried out through a unique motor 22, selectively placed in engagement or disengagement with each of the cradles 21 through a coupling 23 actuated by a relative piston 24 that can be controlled through solenoid valves.

According to a further embodiment, not shown, the cradles 21 are set in rotation by single motors, or by a motor for each pair of cradles 21.

In general, the rotation of the cradles 21 is in any case "called" by the carriers 15 in the feeding channels 12 below reaching a predetermined release position, to ensure the synchronism with them.

Furthermore each cradle 21 is preferably provided with a photocell 25 for detecting the presence of the log 11.

The log saw unit 10 according to the invention comprises a control unit for processing a stop signal relative to a portion of the packaging unit downstream of the log saw unit, for example relative to a packaging machine, generated further to a detection of accumulation of rolls 11' and/or of stop of a packaging machine.

The control unit attributes such a stop signal to a feeding channel/sub-group of feeding channels 12 operatively associated with the portion of the packaging unit in the stopping condition, called "feeding channels/sub-groups of feeding channels 12 subject to stopping".

The method for selectively feeding rolls of paper coming out of a log saw unit according to the invention comprises a step of generating a stop signal relative to a portion of the packaging unit downstream of the log saw unit following a detection of accumulation of rolls and/or of stopping of a packaging machine.

The stop signal, in a second step of the method, is attributed to a feeding channel/sub-group of feeding channels 12 operatively associated with the portion of the packaging unit in the stopping condition, called "feeding channels/sub-groups of feeding channels subject to stopping".

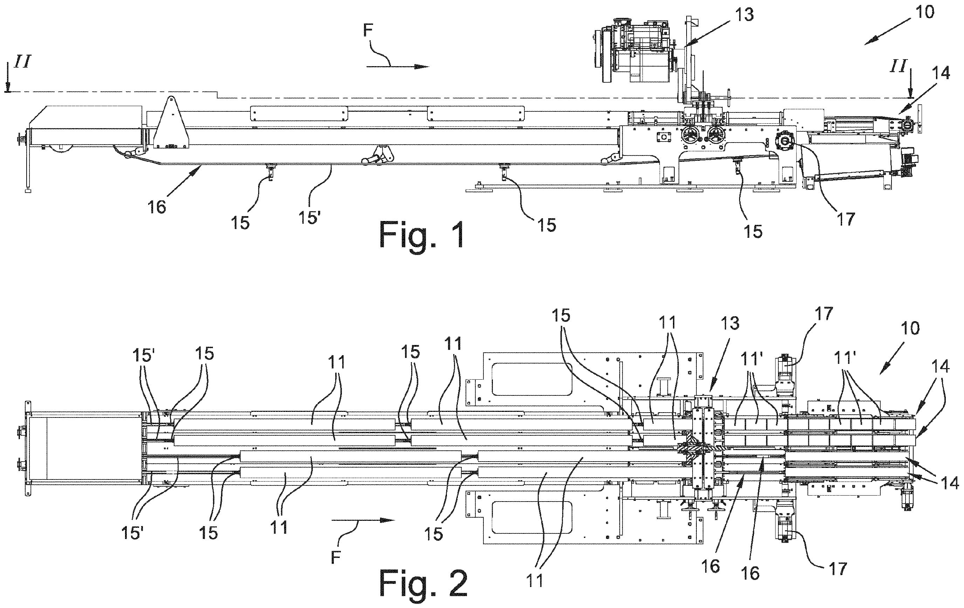

Upon receipt of the stop signal, according to the method object of the invention, at least the following steps are carried out:
- ending the cutting of the log 11 in progress on all of the n feeding channels 12 of the log saw unit 10,
- selectively stopping the forward movement of a new log towards the cutting device 13 just in the feeding channels/sub-groups of feeding channels 12 subject to stopping through the stop of the forward movement of the carrier device 16 of said feeding channels/subgroups of feeding channels 12 subject to stopping, as schematised in figure 1,
- proceeding without interruption in the operative feeding channels 12, namely not subject to the stop signal, with the cutting of the logs 11 in succession during the entire period of presence of the stop signal.

According to the invention, the stop signal also controls the selective interruption of the feeding of the logs from the channel-type accumulator to the cradles/sub-groups of cradles 21 that are operatively associated with the packaging unit portion subject to stopping. Such cradles/sub-groups of cradles 21, in fact, according to the simplified single-control embodiment must remain empty and according to the preferred independent control embodiment are already occupied by a log 11.

Upon receipt of a stop signal and of the consequent control of the feeding channels/sub-groups of feeding channels 12 subject to stopping carried out by the control unit, the cradles/sub-groups of cradles 21 cooperating with them, anyway are able to unload the logs 11 only if the carriers 15 reach the predetermined unloading position.

In the case in which the cradles/sub-groups of cradles 21 are not equipped with independent control, instead with a unique motor that causes the simultaneous rotation of all of the cradles 21, according to the simplified configuration, if they have already been fed with the log 11 by the accumulator before the stop signal receipt, the method according to the invention, after the step of ending the cutting of the log 11 in progress on all of the n feeding channels 12 of the log saw unit 10, provides for an additional step of performing the cutting of a further log on all of the n feeding channels 12 to allow the unloading of the log 11 already contained in the cradles/sub-groups of cradles 21 operatively associated with the feeding channels/sub-groups of feeding channels 12 subject to stopping. Differently, on occasion of the first rotation of all of the cradles 21, controlled by the carriers 15 of the operative feeding channels/subgroups of feeding channels 12 reaching the predetermined release position, in the feeding channels/sub-groups of feeding channels 12 subject to stopping the logs 11 contained in the cradles 21 would at least partially fall onto the logs 11 already present in the feeding channels.

Differently, if the cradles 21 are set in rotation independently according to the preferred embodiment, the carriers 15 of the feeding channels/sub-groups of feeding channels 12 subject to stopping can be stopped immediately at the end of the cutting of the log in progress, thus generating the minimum amount of rolls 11' possible on the conveyors downstream of the log saw unit 10, and the relative cradles/sub-groups of cradles 21 will be prevented from unloading as soon as the carriers 15 have been stopped.

Upon resolution of the problem in the portion of the packaging unit that caused the stop signal, according to the method object of the present invention an end stop signal is generated relative to the portion of the packaging unit downstream of the log saw unit, object of the prior stopping and for which meanwhile a detection of elimination of rolls accumulation and/or of a packaging machine end stop is carried out.

According to an embodiment that is not shown, if the packaging unit comprises three packaging machines, two of which are object of stop signal, according to the invention the end of stop signal could also concern only one of the two packaging machines in the stop condition.

According to the method object of the invention, the end stop signal is attributed by the control unit of the log saw unit 10 to a feeding channel/sub-group of feeding channels 12 operatively associated with the portion of the packaging unit for which the stop reason has been solved, called "feeding channels/sub-groups of feeding channels 12 subject to the end of stop".

Upon receipt of the end stop signal, according to the method object of the invention, in the log saw unit 10 the following steps are carried out:
- ending the cutting of the log 11 in progress in the operative feeding channels 12,
- then selectively starting the forward movement of a new log 11 towards the cutting device 13 only in the feeding channels/sub-groups of feeding channels 12 subject to the end of stop through the start of the forward movement of the carrier device 16 of the feeding channels/sub-groups of feeding channels 12 subject to the end of stop, in which the start of the forward movement of the advancement carrier device 16 is phased in a synchronous manner with the forward movement of the carrier device 16 of the other operative feeding channels 12,
- proceeding without interruption in the operative feeding channels 12, namely those not subject to the stop signal, with the cutting of the logs 11 in succession, thus going back to a complete operativity situation.

In fact, the restart of the advancement carrier device 16 of the feeding channels/sub-groups of feeding channels 12 subject to the end of stop automatically determines, also in the case of independently controlled cradles/sub-groups of cradles 21, the unloading of the log 11 when the carriers 15 go to the predetermined release position.

According to the invention, the end stop signal also controls the reactivation of the selective feeding of the logs from the channel-type accumulator to the cradles/sub-groups of cradles 21 operatively associated with the portion of packaging unit subject to the end of stop.

In light of the above, the cutting of the logs 11 in the feeding channels 12 not subject to stop proceeds unaltered, while the cutting of the logs 11 in the feeding channels 12 subject to stop proceeds at least until the complete cutting at least of the log 11 being processed, not being able to stop the cutting device 13 that simultaneously cuts the logs 11 present on all of the n feeding channels 12, and it is then stopped, at the maximum after the cutting of a successive log 11 for needs of unloading of the preloading device 20, until the problem has been fixed, keeping a log wait in each feeding channel 12, in a position ready for the cutting to start. Based on the length of the logs 11 being processed, which can be of different formats, there can be more logs 11 in succession waiting in the feeding channels 12 subject to stopping. For example figure 1 shows two feeding channels 12 subject to stopping and two operative feeding channels 12. In the feeding channels 12 subject to stopping, in addition to the log 11 waiting in position ready for the cutting to start, there is a second log 11 in the queue. In each of the operative feeding channels 12, the conclusive cutting step of a log 11 in rolls 11' is in progress and two logs 11 are arranged in succession in queued to the log 11 being cut. In the condition shown, the last queued log in the operative feeding channels 12 is in the release position by the preloading device 20, above the feeding channels 12 and not shown for reasons of clarity of representation.

Upon receipt of the end stop signal, the first log 11 waiting in the feeding channels 12 previously stopped is sent for cutting in a synchronous manner with the first whole log sent for cutting in the feeding channels 12 that have not been stopped.

According to the invention, the detection of accumulation of rolls 11' and the detection of the end of accumulation of rolls 11' on the conveyor belts downstream of the unloading belts 14 of the log saw unit 10 is carried out for example through photocells or other means that detect the amount of rolls 11' present on the conveying lines downstream of the log saw unit.

The method for selectively feeding rolls of paper coming out of a log saw unit and the relative log saw unit object of the present invention have the advantage to allow minimising the length of the conveyors arranged downstream of the log saw unit capable of overcoming the machine down times of one of the two packagers through a high-reactive system.

In fact, by only acting on the preloading device of the logs on the feeding channels to prevent the unloading of the logs on the feeding channels being stopped, instead of also stopping the carriers like in the present invention, would require to arrange downstream of the log saw unit conveyor belts suitable for receiving the equivalent of the rolls generated by the cutting of two successive logs. If the stop signal arrives immediately after the preloading device has unloaded the logs onto the feeding channels, there is no way to avoid the rolls derived from the cutting of the log in progress and the one immediately after from ending up on the conveyor belts to the packager. This could still be a reason for stopping the plant especially in situations of short belts if the plant layout provides for little distance between log saw unit and packaging machine.

The method for selectively feeding rolls of paper coming out of a log saw unit and the relative log saw unit thus conceived can undergo numerous modifications and variants and all of the details can be replaced by technically equivalent elements, if falling under the scope of the claims. In practice, the materials used, as well as the sizes, can be whatever according to the technical needs.

## Claims

1. Method for selectively feeding rolls of paper coming out of a log saw unit (10), wherein said log saw unit (10) comprises (n) feeding channels (12) for feeding logs (11) towards a cutting device (13) provided at the outlet with (n) unloading belts (14) in a number equal to the feeding channels (12), **characterised in that** said method comprises a step of generating a stop signal relating to a portion of a packaging unit downstream of the log saw unit (10) further to detection of accumulation of rolls (11') and/or of stop of a packaging machine, as well as a step of attributing said stop signal to a feeding channel/sub-group of feeding channels (12) operatively associated with said portion of the packaging unit, called "feeding channels/sub-groups of feeding channels (12) subject to stopping", wherein said method - upon receipt of said stop signal - comprises at least the steps of:
- ending the cutting of the log (11) in progress on all of said (n) feeding channels (12) of the log saw unit (10),
- selectively stopping the forward movement of a new log (11) towards the cutting device (13) just in the feeding channels/sub-groups of feeding channels (12) subject to stopping through the stopping of the forward movement of the carriers (15) of the carrier device (16) of said feeding channels/sub-groups of feeding channels (12) subject to stopping,
- proceeding without interruption in the operative feeding channels (12), namely those not subject to stop signal, with the cutting of the logs (11) in succession.

2. Method according to claim 1, **characterised in that** said feeding channels (12) of said log saw unit (10) are fed by a preloading device (20) for preloading logs, comprising (n) cradles (21) set in rotation once the carriers (15) of the feeding channels (12) have reached a predetermined release position, in particular said cradles (21) being set in rotation simultaneously with respect to each other once the release position has been reached by the carriers (15) of the feeding channels/sub-groups of operative feeding channels (12) or being set in rotation independently from each other once the release position has been reached by the carriers (15) of the corresponding feeding channels/sub-groups of feeding channels (12).

3. Method according to claim 2, **characterised in that** the stop signal also controls the selective interruption of the feeding of logs (11) to the cradles/sub-groups of cradles (21) operatively associated with the portion of packaging unit subject to stopping.

4. Method according to claim 3, **characterised in that** it comprises, after the step of ending the cutting of the log (11) in progress on all of the (n) feeding channels (12) of the log saw unit (10), an additional step of performing the cutting of a further log on all of the (n) feeding channels (12) in order to allow the unloading of the log (11) already contained in the cradles/sub-groups of cradles (21) operatively associated with the feeding channels/sub-groups of feeding channels (12) subject to stopping.

5. Method according to any of the previous claims, **characterised in that** it comprises a step of generating an end stop signal relating to a portion of the packaging unit downstream of the log saw unit (10) further to detection of elimination of accumulation of rolls (11') and/or of the end of the stop of a packaging machine, as well as a step of attributing said end stop signal to a feeding channel/sub-group of feeding channels (12) operatively associated with said portion of the packaging unit, called "feeding channels/sub-groups of feeding channels subject to stopping", wherein said method - upon receipt of the end stop signal - comprises the steps of:
- ending the cutting of the log (11) in progress in the operating feeding channels (12),
- then selectively restarting the forward movement of a new log (11) towards the cutting device (13) just in the feeding channels/sub-groups of feeding channels (12) subject to end of the stop through the starting of the forward movement of the carrier device (16) of said feeding channels/sub-groups of feeding channels (12) subject to end of the stop, wherein the starting of the forward movement of the advancement carrier device (16) is phased in a synchronous manner with the forward movement of the carrier device (16) of the other operating feeding channels (12),
- proceeding without interruption in the operating feeding channels (12) not subject to stop signal with the cutting of the logs (11) in succession.

6. Method according to claims 1 or 5, **characterised in that** said detection of accumulation of rolls (11') and said detection of elimination of accumulation of rolls (11') is performed through photocells that detect the amount of rolls (11') present on the conveying lines downstream of the log saw unit (10).

7. Log saw unit for logs of paper comprising a number equal to (n) feeding channels (12) for feeding logs (11), a cutting device (13) for cutting rolls (11') of paper and a number equal to (n) unloading belts (14) in a number equal to the feeding channels (12) arranged downstream of the cutting device (13) and suitable for transferring rolls (11') towards a packaging unit, **characterised in that** it comprises a control unit for processing a stop signal relating to a portion of the packaging unit downstream of the log saw unit generated further to detection of accumulation of rolls (11') and/or of a stop of a packaging machine and for attributing said stop signal to a feeding channel/sub-group of feeding channels (12) operatively associated with said portion of the packaging unit, called "feeding channels/sub-groups of feeding channels subject to stopping", and **in that** said feeding channels/sub-groups of feeding channels (12) comprise an advancement carrier device (16) equipped with actuators (17) that are independent from each other and selectively controllable by said control unit, like for example single servomotors for each feeding channel/sub-groups of feeding channels (12).

8. Log saw unit according to claim 7, **characterised in that** it comprises a log preloading device (20), suitable for receiving logs coming from a channel-type accumulator, wherein said preloading device (20) comprises a number equal to (n) cradles (21), each suitable for receiving a log (11), each of said cradles (21) being supported in rotation on opposite end walls at a longitudinal axis (26) in order to allow a rotation of 360° suitable for unloading the log therein contained on the feeding channel (12) below.

9. Log saw unit according to claim 8, **characterised in that** said cradles feeding cradles/sub-groups of cradles (21) have an independent control.

10. Log saw unit according to claim 9, **characterised in that** said independent control consists of a single motor (22) arranged selectively engaged or disengaged through a coupling (23) actuated by a relative piston (24) that is controllable through solenoid valves, or by independent motors.

## Patentansprüche

1. Verfahren zur selektiven Zuführung von Papierrollen aus einer Sägeeinheit (10), wobei die Sägeeinheit (10) (n) Zuführkanäle (12) zum Zuführen von langförmigen Produkten (11) zu einer Schneidevorrichtung (13) umfasst, die am Auslass mit (n) Entladebändern (14) in einer Anzahl gleich der Zuführkanäle (12) vorgesehen ist, **dadurch gekennzeichnet, dass** das Verfahren einen Schritt des Erzeugens eines Stoppsignals umfasst, das sich auf einen Abschnitt einer Verpackungseinheit stromabwärts der Sägeeinheit (10) nach dem Erfassen einer Ansammlung von Rollen (11') und/oder Stoppen einer Verpackungsmaschine bezieht, sowie einen Schritt des Zuordnens des Stoppsignals zu einem Zuführkanal/Untergruppe von Zuführkanälen (12), die mit dem Abschnitt der Verpackungseinheit wirkverbunden sind und als "zu stoppende Zuführkanäle/Untergruppen von Zuführkanälen (12)" bezeichnet werden, wobei das Verfahren nach Erhalt des Stoppsignals wenigstens folgende Schritte umfasst:
- Beenden des in allen (n) Zuführkanälen (12) der Sägeeinheit (10) im Gang befindlichen Schneidens der langförmigen Produkte (11),
- selektives Stoppen der Vorwärtsbewegung eines neuen langförmigen Produkts (11) zu der Schneidevorrichtung (13) nur in den zu stoppenden Zuführkanälen/Untergruppen von Zuführkanälen (12) durch Stoppen der Vorwärtsbewegung der Träger (15) der Trägervorrichtung (16) der zu stoppenden Zuführkanäle/Untergruppen von Zuführkanälen (12),
- unterbrechungsfreies Fortsetzen des hintereinander erfolgenden Schneidens der langförmigen Produkte (11) in den operativen Zuführkanälen (12), insbesondere jenen, die keinem Stoppsignal unterliegen.

2. Verfahren nach Anspruch 1, **dadurch gekennzeichnet, dass** die Zuführkanäle (12) der Sägeeinheit (10) durch eine Vorspannvorrichtung (20) zum Vorspannen von Rollen gespeist werden, umfassend (n) Gestelle (21), die in Rotation versetzt werden, sobald die Träger (15) der Zuführkanäle (12) eine vorgegebene Freigabeposition erreicht haben, wobei insbesondere die Gestelle (21) in Bezug aufeinander gleichzeitig in Rotation versetzt werden, sobald die Freigabeposition von den Trägern (15) der Zuführkanäle/Untergruppen von operativen Zuführkanälen (12) erreicht wurde, oder die voneinander unabhängig in Rotation versetzt werden, sobald die Freigabeposition von den Gestellen (15) der entsprechenden Zuführkanäle/Untergruppen von Zuführkanälen (12) erreicht wird.

3. Verfahren nach Anspruch 2, **dadurch gekennzeichnet, dass** das Stoppsignal auch die selektive Unterbrechung des Zuführens von langförmigen Produkten (11) zu den Gestellen/Untergruppen von Gestellen (21) steuert, die mit dem Abschnitt der zu stoppenden Verpackungseinheit wirkverbunden sind.

4. Verfahren nach Anspruch 3, **dadurch gekennzeichnet, dass** es nach dem Schritt des Beendens des in allen (n) Zuführkanälen (12) der Sägeeinheit (10) im Gang befindlichen Schneidens der langförmigen Produkte (11) ein zusätzlicher Schritt des Ausführens des Schneidens einer weiteren langförmigen Produkt in allen (n) Zuführkanälen (12) umfasst, um das Entladen der langförmigen Produkt (11) zu erlauben, die bereits in den Gestellen/Untergruppen von Gestellen (21) enthalten ist, die mit den zu stoppenden Zuführkanälen/Untergruppen von Zuführkanälen (12) wirkverbunden sind.

5. Verfahren nach einem der vorstehenden Ansprüche, **dadurch gekennzeichnet, dass** es einen Schritt des Erzeugens eines Endstoppsignals umfasst, das sich auf einen Abschnitt der Verpackungseinheit stromabwärts der Sägeeinheit (10) nach Erfassen der Beseitigung der Ansammlung von Rollen (11') und/oder der Beendigung des Stopps einer Verpackungsmaschine bezieht, ebenso wie einen Schritt des Zuweisens des Endstoppsignals an einen Zuführkanal/Untergruppe von Zuführkanälen (12), die mit dem Abschnitt der Verpackungseinheit wirkverbunden ist und als "zu stoppende Zuführkanäle/Untergruppen von Zuführkanälen" bezeichnet wird, wobei das Verfahren nach Erhalt des Endstoppsignals folgende Schritte umfasst:
- Beenden des in den operativen Zuführkanälen (12) im Gang befindlichen Schneidens des langförmigen Produkts (11),
- anschließendes selektives Neustarten der Vorwärtsbewegung einer neuen langförmigen Produkt (11) zur Schneidevorrichtung (13) nur in den Zuführkanälen/Untergruppen von Zuführkanälen (12), die der Beendigung des Stopps durch das Starten der Vorwärtsbewegung der Trägervorrichtung (16) der Zuführkanäle/Untergruppen von Zuführkanälen (12) unterliegen, die der Beendigung des Stopps unterliegen, wobei das Starten der Vorwärtsbewegung der Vorschubträgervorrichtung (16) schrittweise synchron mit der Vorwärtsbewegung der Trägervorrichtung (16) der anderen operativen Zuführkanäle (12) erfolgt,
- unterbrechungsfreies Fortsetzen des hintereinander erfolgenden Schneidens der langförmigen Produkte (11) in den operativen Zuführkanälen (12), die keinem Stoppsignal unterliegen.

6. Verfahren nach Anspruch 1 oder 5, **dadurch gekennzeichnet, dass** das Erfassen der Ansammlung von Rollen (11') und das Erfassen der Beseitigung der Ansammlung von Rollen (11') durch Fotozellen ausgeführt wird, die die Menge von Rollen (11') erfassen, die auf den Förderbändern stromabwärts der Sägeeinheit (10) vorhanden sind.

7. Sägeeinheit für langförmige Papierprodukte, umfassend eine Anzahl von (n) Zuführkanälen (12) zum Zuführen von langförmigen Produkten (11), eine Schneidevorrichtung (13) zum Schneiden von Papierrollen (11') und eine Anzahl von (n) Entladebändern (14) in gleicher Anzahl wie die Zuführkanäle (12), die stromabwärts der Schneidevorrichtung (13) angeordnet und zum Umsetzen der Rollen (11') zur Verpackungseinheit geeignet sind, **dadurch gekennzeichnet, dass** sie eine Steuereinheit zum Verarbeiten eines Stoppsignals umfasst, das sich auf einen Abschnitt der Verpackungseinheit stromabwärts der Sägeeinheit bezieht und nach Erfassen der Ansammlung von Rollen (11') und/oder eines Stopps einer Verpackungsmaschine erzeugt wird, und zum Zuweisen des Stoppsignals an einen Zuführkanal/Untergruppe von Zuführkanälen (12), die mit dem Abschnitt der Verpackungseinheit wirkverbunden sind und als "zu stoppende Zuführkanäle/Untergruppen von Zuführkanälen" bezeichnet werden, sowie dadurch, dass die Zuführkanäle/Untergruppen von Zuführkanälen (12) eine Vorschubträgervorrichtung (16) umfassen, die mit Stellgliedern (17) ausgestattet ist, die voneinander unabhängig und selektiv durch die Steuereinheit steuerbar sind, wie beispielsweise einzelne Stellmotoren für jeden Zuführkanal/Untergruppen von Zuführkanälen (12).

8. Sägeeinheit nach Anspruch 7, **dadurch gekennzeichnet, dass** sie eine Vorspannvorrichtung (20) für langförmige Produkte umfasst, die dazu geeignet ist, die aus einem kanalartigen Sammelbehälter herauskommenden langförmigen Produkte aufzunehmen, wobei die Vorspannvorrichtung (20) eine Anzahl von (n) Gestellen (21) umfasst, die jeweils zur Aufnahme einer langförmigen Produkt (11) geeignet sind, wobei jedes Gestell (21) in der Rotation an gegenüberliegenden Stirnwänden auf einer Längsachse (26) gehalten wird, um eine Rotation von 360° zu erlauben, die zum Entladen der darin enthaltenen langförmigen Produkt in den darunter befindlichen Zuführkanal (12) geeignet ist.

9. Sägeeinheit nach Anspruch 8, **dadurch gekennzeichnet, dass** die Gestelle zum Zuführen von Gestellen/Untergruppen von Gestellen (21) eine unabhängige Steuerung aufweisen.

10. Sägeeinheit nach Anspruch 9, **dadurch gekennzeichnet, dass** die unabhängige Steuerung aus einem einzelnen Motor (22) besteht, der durch eine Kupplung (23) selektiv eingerückt oder ausgerückt angeordnet ist, die durch einen entsprechenden, durch Magnetventile steuerbaren Kolben (24) oder durch unabhängige Motoren betätigt wird.

## Revendications

1. Procédé pour l'alimentation sélective de rouleaux de papier sortant d'une unité de coupe de bobine (10), dans lequel ladite unité de coupe de bobine (10) comprend (n) canaux d'alimentation (12) pour l'alimentation de bobines (11) vers un dispositif de coupe (13) disposé à la sortie avec (n) courroies de déchargement (14) en nombre égal aux canaux d'alimentation (12), **caractérisé en ce que** ledit procédé comprend une étape de génération d'un signal d'arrêt relatif à une portion d'une unité d'emballage en aval de l'unité de coupe de bobine (10) au-delà de la détection d'une accumulation de rouleaux (11') et/ou d'un arrêt d'une machine d'emballage, ainsi qu'une étape d'attribution dudit signal d'arrêt à un canal d'alimentation/sous-groupe de canaux d'alimentation (12) associé fonctionnellement à ladite portion de l'unité d'emballage, dénommé « canaux d'alimentation/sous-groupes de canaux d'alimentation (12) sujets à l'arrêt », dans lequel ledit procédé - à la réception dudit signal d'arrêt - comprend au moins les étapes suivantes :
- la cessation de la coupe de la bobine (11) en cours sur la totalité desdits (n) canaux d'alimentation (12) de l'unité de coupe de bobine (10),
- l'arrêt sélectif du mouvement d'avance d'une nouvelle bobine (11) vers le dispositif de coupe (13) juste dans les canaux d'alimentation/sous-groupes de canaux d'alimentation (12) sujets à l'arrêt par le biais de l'arrêt du mouvement d'avance des supports (15) du dispositif de support (16) desdits canaux d'alimentation/sous-groupes de canaux d'alimentation (12) sujets à l'arrêt,
- la poursuite sans interruption dans les canaux d'alimentation opérationnels (12), précisément ceux non soumis à un signal d'arrêt, avec la coupe des bobines (11) en succession.

2. Procédé selon la revendication 1, **caractérisé en ce que** lesdits canaux d'alimentation (12) de ladite unité de coupe de bobine (10) sont alimentés par un dispositif de pré-chargement (20) pour le pré-chargement de bobines, comprenant (n) berceaux (21) mis en rotation une fois que les supports (15) des canaux d'alimentation (12) ont atteint une position de libération prédéterminée, en particulier lesdits berceaux (21) étant mis en rotation simultanément l'un par rapport à l'autre une fois que la position de libération a été atteinte par les supports (15) des canaux d'alimentation/sous-groupes de canaux d'alimentation opérationnels (12) ou étant mis en rotation indépendamment l'un de l'autre une fois que la position de libération a été atteinte par les supports (15) des canaux d'alimentation/sous-groupes de canaux d'alimentation (12) correspondants.

3. Procédé selon la revendication 2, **caractérisé en ce que** le signal d'arrêt commande également l'interruption sélective de l'alimentation de bobines (11) aux berceaux/sous-groupes de berceaux (21) associés fonctionnellement à la portion d'unité d'emballage sujette à l'arrêt.

4. Procédé selon la revendication 3, **caractérisé en ce qu'**il comprend, après l'étape de cessation de la coupe de la bobine (11) en cours sur la totalité des (n) canaux d'alimentation (12) de l'unité de coupe de bobine (10), une étape additionnelle d'exécution de la coupe d'une autre bobine sur la totalité des (n) canaux d'alimentation (12) de manière à permettre le déchargement de la bobine (11) déjà contenue dans les berceaux/sous-groupes de berceaux (21) associés fonctionnellement aux canaux d'alimentation/sous-groupes de canaux d'alimentation (12) sujets à l'arrêt.

5. Procédé selon l'une quelconque des revendications précédentes, **caractérisé en ce qu'**il comprend une étape de génération d'un signal de fin d'arrêt relatif à une portion de l'unité d'emballage en aval de l'unité de coupe de bobine (10) au-delà de la détection de l'élimination d'une accumulation de rouleaux (11') et/ou de la fin de l'arrêt d'une machine d'emballage, ainsi qu'une étape d'attribution dudit signal de fin d'arrêt à un canal d'alimentation/sous-groupe de canaux d'alimentation (12) associé fonctionnellement à ladite portion de l'unité d'emballage, dénommé « canaux d'alimentation/sous-groupes de canaux d'alimentation sujets à l'arrêt », dans lequel ledit procédé - à la réception du signal de fin d'arrêt - comprend les étapes suivantes :
- la cessation de la coupe de la bobine (11) en cours dans les canaux d'alimentation opérationnels (12),
- puis, le redémarrage sélectif du mouvement d'avance d'une nouvelle bobine (11) vers le dispositif de coupe (13) juste dans les canaux d'alimentation/sous-groupes de canaux d'alimentation (12) sujets à la fin de l'arrêt par le biais du démarrage du mouvement d'avance du dispositif de support (16) desdits canaux d'alimentation/sous-groupes de canaux d'alimentation (12) sujets à la fin de l'arrêt, dans lequel le démarrage du mouvement d'avance du dispositif de support d'avancement (16) est échelonné d'une manière synchrone avec le mouvement d'avance du dispositif de support (16) des autres canaux d'alimentation opérationnels (12),
- la poursuite sans interruption dans les canaux d'alimentation opérationnels (12) non soumis à un signal d'arrêt de la coupe des bobines (11) en succession.

6. Procédé selon les revendications 1 ou 5, **caractérisé en ce que** ladite détection d'accumulation de rouleaux (11') et ladite détection d'élimination d'accumulation de rouleaux (11') sont effectuées par l'intermédiaire de cellules photoélectriques qui détectent la quantité de rouleaux (11') présents sur les lignes de transport en aval de l'unité de coupe de bobine (10).

7. Unité de coupe de bobine pour des bobines de papier comprenant un nombre égal à (n) canaux d'alimentation (12) pour l'alimentation de bobines (11), un dispositif de coupe (13) pour couper des rouleaux (11') de papier et un nombre égal à (n) courroies de déchargement (14) en nombre égal aux canaux d'alimentation (12) agencés en aval du dispositif de coupe (13) et adaptés pour transférer des rouleaux (11') vers une unité d'emballage, **caractérisé en ce qu'**il comprend une unité de commande pour traiter un signal d'arrêt relatif à une portion de l'unité d'emballage en aval de l'unité de coupe de bobine, généré au-delà de la détection d'une accumulation de rouleaux (11') et/ou d'un arrêt d'une machine d'emballage et pour attribuer ledit signal d'arrêt à un canal d'alimentation/sous-groupe de canaux d'alimentation (12) associé fonctionnellement à ladite portion de l'unité d'emballage, dénommé « canaux d'alimentation/sous-groupes de canaux d'alimentation sujets à l'arrêt », et **en ce que** lesdits canaux d'alimentation/sous-groupes de canaux d'alimentation (12) comprennent un dispositif de support d'avance (16) équipé d'actionneurs (17) qui sont indépendants l'un de l'autre et peuvent être commandés de manière sélective par ladite unité de commande, comme par exemple des servomoteurs individuels pour chaque canal d'alimentation/sous-groupes de canaux d'alimentation (12).

8. Unité de coupe de bobine selon la revendication 7, **caractérisée en ce qu'**il comprend un dispositif de pré-chargement de bobine (20), adapté pour recevoir des bobines arrivant d'un accumulateur de type canal, dans laquelle ledit dispositif de pré-chargement (20) comprend un nombre égal à (n) berceaux (21), chacun adapté pour recevoir une bobine (11), chacun desdits berceaux (21) étant supporté en rotation sur des parois d'extrémité opposées au niveau d'un axe longitudinal (26) de manière à permettre une rotation de 360° adaptée pour décharger la bobine contenue à l'intérieur sur le canal d'alimentation (12) au-dessous.

9. Unité de coupe de bobine selon la revendication 8, **caractérisée en ce que** lesdits berceaux alimentant des berceaux/sous-groupes de berceaux (21) ont une commande indépendante.

10. Unité de coupe de bobine selon la revendication 9, **caractérisée en ce que** ladite commande indépendante consiste en un moteur individuel (22) agencé de manière sélective engagé ou désengagé par l'intermédiaire d'un accouplement (23) actionné par un piston correspondant (24) qui peut être commandé au moyen d'électrovannes, ou par des moteurs indépendants.
